**Europäisches Patentamt**

**European Patent Office**

**Office européen des brevets**

(19)

(11) Veröffentlichungsnummer: **0 008 377**
**B1**

(12) **EUROPÄISCHE PATENTSCHRIFT**

(45) Veröffentlichungstag der Patentschrift: **30.06.82**

(51) Int. Cl.³: **G 05 B 19/10, D 06 F 33/02**

(21) Anmeldenummer: **79102622.2**

(22) Anmeldetag: **24.07.79**

(54) Programmwahleinrichtung.

(30) Priorität: **04.08.78 DE 2834351**

(43) Veröffentlichungstag der Anmeldung:
**05.03.80 Patentblatt 80/5**

(45) Bekanntmachung des Hinweises auf die Patenterteilung:
**30.06.82 Patentblatt 82/26**

(84) Benannte Vertragsstaaten:
**CH FR GB IT SE**

(56) Entgegenhaltungen:
**DE - A1 - 2 822 077**
**DE - A1 - 2 849 417**
**DE - B1 - 2 650 964**
**US - A - 4 104 542**

(73) Patentinhaber: **G. Bauknecht Gesellschaft mit beschränkter Haftung**
**Heidenklinge 22**
**D-7000 Stuttgart 1 (DE)**

(72) Erfinder: **Glasmacher, Peter, Dipl.-Ing.**
**Boxbergerstrasse 11**
**D-8000 München 45 (DE)**

(74) Vertreter: **König, Oskar, Dr.-Ing. Dipl.-Phys.**
**Klüpfelstrasse 6 Postfach 51**
**D-7000 Stuttgart 1 (DE)**

Courier Press, Leamington Spa, England.

## Programmwahleinrichtung

Die Erfindung betrifft eine Programmwahleinrichtung für programmgesteuerte Hauschaltsgeräte, wie insbesondere Waschautomaten, bei der über eine Steuereinrichtung eine Zahlentastatur für die Eingabe von Programmkenndaten in Form von gegebenenfalls mehrstelligen Kennzahlen mit einer Anzeigeeinrichtung für eine fortlaufende Anzeige der über die einzelnen Tasten der Zahlentastatur nacheinander eingegebenen Programmkenndaten und mit einem nach einem durch die eingegebenen Programmkenndaten bestimmten Programm zu betreibenden Haushaltsgerät gekoppelt ist.

Bei programmgesteuerten Hauschaltsgeräten der oben erwähnten Art, für die neben Waschautomaten als weitere mögliche Beispiele Wäschetrockner, Geschirrspüler und Mikrowellenherde genannt werden können, umfaßt der Betreibsablauf eine Vielzahl von Einzelschritten, die außerdem jeder für sich in meist mehreren Parametern variieren können. Dies ergibt eine Vielzahl von möglichen Programmen, zwischen denen jeweils eine optimale Auswahl getroffen werden muß, Dessen ungeachtet darf die Programmauswahl weder einen zu großen Bedienungsaufwand noch eine nennenswerte Anlernzeit für den Gerätebenutzer verlangen.

In der DE—AS 26 50 964 ist ein Programmeingabegerät für elektronische Steuergeräte beschrieben, das die Aufstellung eines Maschinenprogramms gestattet, das aus mehreren nacheinander ablaufenden Programmsätzen besteht. Die Programmierung geschieht bei diesem bekannten Gerät anhand von als Zahlen kodierten Adressen auf einer geräteeigenen Anzeigetafel. Für die Eingabe der entsprechenden Zahlenkodes ist eine Zahlentastatur vorgesehen, während die zugehörigen Adressen mittels Adressentasten bestimmt werden, die entweder gesondert betätigt werden oder in Kombination mit ihrer Kennzeichnung auch eine Aktivierung erfahren, so daß sich ihre gesonderte Betätigung erübrigt. Jeder Adressentaste ist eine Leuchtanzeige zugeordnet, auf der zunächst eine Kennzeichnung für die jeweils zu betätigende oder zu aktivierende Adressentaste und anschließend der jeweils eingegebene Zahlenkode zur Anzeige gelangt.

Mit Hilfe einer solchen Programmierung läßt sich zwar eine weitgehende Wahlfreiheit für die Programmzusammenstellung erreichen, es besteht jedoch gleichzeitig in hohem Maße die Gefahr einer Fehlprogrammierung durch die Eingabe von nicht miteinander vereinbaren Programmparametern, da grundsätzlich keinerlei Beschränkung in der Auswahl der einzugebenden Zahlenkodes vorgesehen ist. Eine solche Beschränkung wäre im übrigen auch systemwidrig, da bei Bearbeitungsmaschinen, für deren Steuerung das bekannte Programmeingabegerät bestimmt ist, im allgemeinen kein Zusammenhang zwischen den einzelnen Bearbeitungsschritten besteht und daher für jeden einzelnen Scritt eine unabhängige Parameterauswahl möglich sein sollte. Darüber hinaus kann von den mit der Programmeingabe für derartige Maschinen betrauten Personen eine gewisse Erfahrung und ein gewisses Verständnis für die technischen Zusammenhänge erwartet werden, die zusammengenommen eine ausreichende Sicherheit gegen Programmierfehler bieten dürften.

Demgegenüber können solche Forderungen an die Benutzer von Hauschaltsgeräten nicht ohne weiteres gestellt werden, und es ist daher Aufgabe der vorliegenden Erfindung, eine Programmwahleinrichtung der eingangs erwähnten Art so auszugestalten, daß sie ohne besondere Erfahrung und Aufmerksamkeit des Gerätebenutzers eine stets ferhlerfreie und optimale Programmauswahl für den Betrieb des zugehörigen Haushaltsgeräts zu gewährleisten vermag.

Die gestellte Aufgabe wird erfindungsgemäß dadurch gelöst, daß an die Steuereinrichtung zusätzlich ein Signalgeber angeschlossen ist, daß alle Programmkenndaten aus einer Kennzahl mit stets gleicher Stellenanzahl bestehen und daß die Steuereinrichtung an die Anzeigeeinrichtung jede neu über di Zahlentastatur eingegebene Kennzahlstelle weitergibt, dem Haushaltsgerät über die feste Anzahl der zu einem Programm gehörenden Kennzahlstellen hinaus jedoch nur solche weitere Kennzahlstellen zuführt, die mit dem bereits eingestellten Programm vereinbare Modifikationen für dieses Programm bedeuten, endere Kennzahlstellen jedoch für dieses eingestellte Programm nicht wirksam werden läßt und stattdessen den Signalgeber aktiviert.

Vorteilhafte Ausgestaltungen und Weiterbildungen der Erfindung ergeben sich aus den Unteransprüchen.

Als Grundprinzip der Erfindung ist anzusehen, daß jede einzelne Eingabehandlung des Gerätebenutzers eine Reaktion der Programmwahleinrichtung zur Folge hat. Auf diese Weise wird ein ständiger Kontakt mit dem Gerätebenutzer gewahrt, wodurch Fehleinstellungen vermieden werden und ständig eine fortlaufende Zustandsinformation über das für das jeweilige Haushaltsgerät wirksame Programm erfolgt. Damit ist gleichzeitig auch eine ständige Anzeige für das ordnungsgemäße Arbeiten des betreffenden Haushaltsgeräts verbunden.

Die erfindungsgemäß gestaltete Programmwahleinrichtung ist zum einen kostengünstig in der Herstellung und zum anderen völlig sicher in der Bedienung. Dabei beitet die erfindungsgemäß vorgesehene doppelte Anzeige eines etwaigen Eingabefehlers über die Anzeigeeinrichtung einerseits und über den Signalgeber andererseits noch den weiteren Vorteil, daß die Fehleingabe nicht nur ohne unerwünschte Wirkung für den Betriebsablauf bleibt, sondern auch ohne weiteres erkannt und korrigiert werden kann.

Die erfindungsgemäß ausgebildete Programmwahleinrichtung gestattet mit Hilfe einer Eingabetastatur mit zehn Tasten für die Ziffern 0 bis 9 die Auswahl aller erforderlichen Grundprogramme beispielsweise für einen Waschautomaten und außerdem die Wahl zusätzlich gewünschter Parameter für Zusatzfunktionen und Endbehandlungen sowie individuelle Temperaturvorgaben. Über eine zusätzliche Taste kann das jeweilige Hauschaltsgerät ganz vom Speisenetz getrennt und damit abgeschaltet werden, was gleichzeitig die Löschung der gerade vorhandenen Programmeinstellung zur Folge hat.

Bei der Programmwahl können die Kennzahlen 01 bis 08 Grundprogramme und die Kennzahlen 09 bis 12 Zusatsfunktionen zugeordnet sein, während die Kennzahlen 13 bis 18 Endbehandlungen entsprechen und etwa die Kennzahlen 19 bis 95 Temperaturvorgaben bezeichnen.

Während der Eingabe werden die einzelnen Kennzahlziffern fortlaufend optisch quttiert, und bei Wahl von nicht mit dem bereits ausgewählten Grundprogramm vereinbarten weiteren Parametern für Zusatzfunktionen oder Endbehandlungen und Temperaturvorgaben erfolgt zum einen eine Unterdrückung dieser Daten für den Gerätebetrieb und zum anderen eine Signalgabe, die den Gerätebenutzer auf seinen Irrtum bei der Programmwahl aufmerksam macht. Statt des falsch gewählten Parameters, also beispielsweise einer zu einem bereits gewählten Programm nicht passenden Temperaturvorgabe wird für den späteren Betriebsablauf automatisch die dem gewählten Programm entsprechende Standardeinstellung beibehalten.

Die Eigenschaften der erfindungsgemäß erhaltenen Programmwahleinrichtung lassen sich kurz dahingehend zusammenfassen, daß die Eingabe in Form von mehrstelligen Kennzahlen erfolgt, daß diesen Kennzahlen eine Vielzahl von Bedeutungen wie Hauptprogrammnummer, Zusatzfunktion, Sonderprogramm, Endbehandlung, Programmparameter wie etwa Laugentemperatur bei einem Waschautomaten, oder Programmzeiten zukommt, daß jede Einzeleingabe in ständiger Rückkopplung zum Gerätebenutzer rückgemeldet wird, daß jede eingegebene Kennzahl mit einer mehrstelligen Ziffernanzeige sichtbar gemacht wird, wobei vorzugsweise während der Eingabe noch einzugebende Kennzahlstellen durch ein besonderes Aufforderungszeichen an den Benutzer markiert werden, daß durch eine dynamische Kennzahlverriegelung eine ferlerhaft Geräteeinstellung verhindert wird, wobei fehlerhafte oder unpassende Kennzahlstellen die Geräteeinstellung unverändert lassen und eine Anzeige durch den Signalgeber auslösen, daß alle eingestellten Programme und Parameter durch die Anzeigeeinrichtung sichtbar gemacht werden und daß mit der Wahl eines Grundprogramms durch Eingabe der entsprechenden Kennzahl eine automatische Standardeinstellung der Parameter erfolgt.

In der Zeichnung ist die Erfindung anhand von Ausführungsbeispielen veranschlaulicht, die sich auf den Betrieb insbesondere eines Waschautomaten beziehen. In ganz analoger Weise kann die Erfindung aber auch bei anderen Hauschaltsgeräten wie Wäschetrocknern, Geschirrspülern oder Mikrowellenherden zum Einsatz kommen, die ebenfalls nach einem mehr oder weniger umfangreichen Programm betrieben werden. Dabei ist die erfindungsgemäB ausgelegte Programmwahleinrichtung jeweils mit der Steuerung des betreffenden Geräts gekoppelt, indem ihre Steuereinrichtung, die insbesondere in Form eines Mikrocomputers ausgeführt sein kann, entweder mit einer entsprechenden Steuerlogik für das Gerät verbunden oder mit dieser Steuerlogik verinigt ist.

In der Zeichnung zeigen:

Fig. 1 ein Blockschaltbild für die elektrischen Verbindungen zwischen den einzelnen Teilen einer erfindungsgemäß ausgebildeten Programmwahleinrichtung und ihren Anschluß an weitere Baustufen des zugehörigen Hauschaltsgeräts,

Fig. 2 ein Beispiel für die Arbeitsweise der Anzeigeeinrichtung im Rahmen der Programmwahleinrichtung von Fig. 1 und

Fig. 3 eine tabelarische Zusammenstellung der für ein bestimmtes Grundprogramm möglichen (x) und standardgemäßen (o) Parameter für die Steuerung eines Waschautomaten.

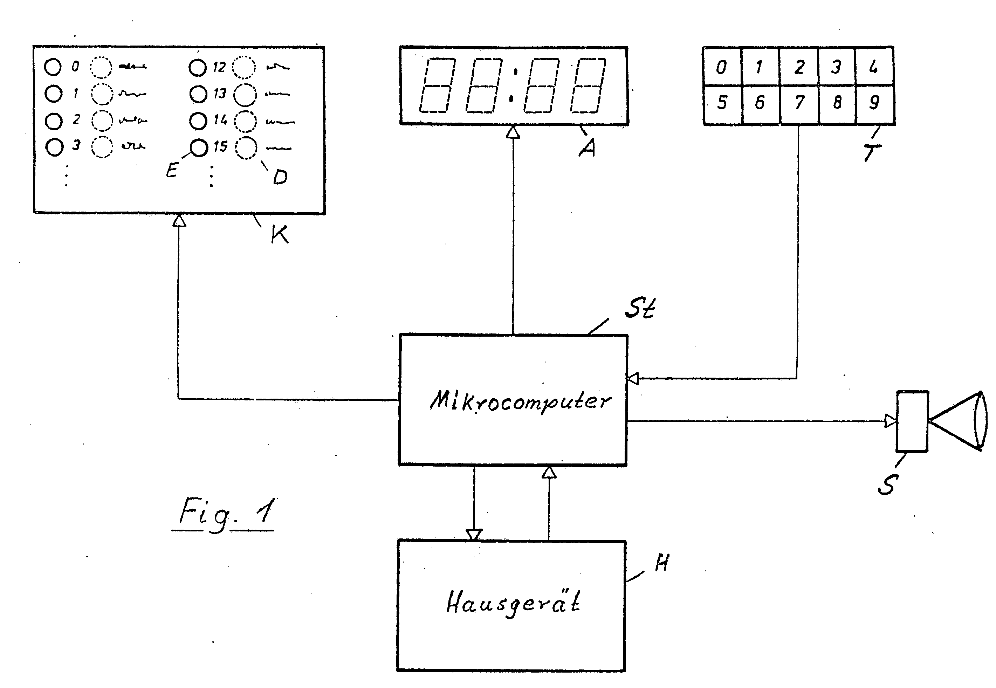

In dem Blockschaltbild von Fig. 1 sind an eine in Form eines Mikrocomputers ausgebildete Steuereinrichtung St eine Eingabetastatur T mit zehn einzelnen Eingabetasten für die Ziffern von 0 bis 9, ein als vierstellige Segmentanzeige ausgeführtes Anzeigefeld A, eine Kennzahlentafel K, ein als Summer ausgebildeter Signalgeber S und schließlich ein Haushaltgerät H angeschlossen, das beispielsweise ein Waschautomat ist. Die Kennzahlentafel K weise für jedes mögliche Programm und jeden möglichen Parameter ein Anzeigeelement E und eine zugeordnete Bezeichnung D auf. Als Anzeigeelemente E kommen insbesondere Leuchtdioden in Betracht, und auch die Bezeichnungen D können in Form von Leuchtzeichen ausgebildet sein.

Der Betrieb des Geräts H erfolgt nach einem von mehreren möglichen Programmen, das jeweils durch eine mehrstellige Kennzahl ausgewählt werden kann. Bei dem dargestellten Beispiel ist eine Steuerung mit Hilfe zweistelliger Kennzahlen vorgesehen; es kann jedoch ohne weiteres auch mit drei- oder vierstelligen Kennzahlen gearbeitet werden, wodurch sich eine weitere Verveilfachung in den Auswahlmöglichkeiten für Programme und Parameter ergibt.

Die Eingabe der Kennzahlen erfolgt mit Hilfe der Eingabetastatur T, die über die Steuereinrichtung St mit der Anzeigetafel A und der Kennzahlentafel K gekoppelt ist, die gemeinsam die Anzeigeeinrichtung bilden, über die das jeweils ausgewählte Programm und die augenblicklich eingestellten Parameter sichtbar gemacht werden.

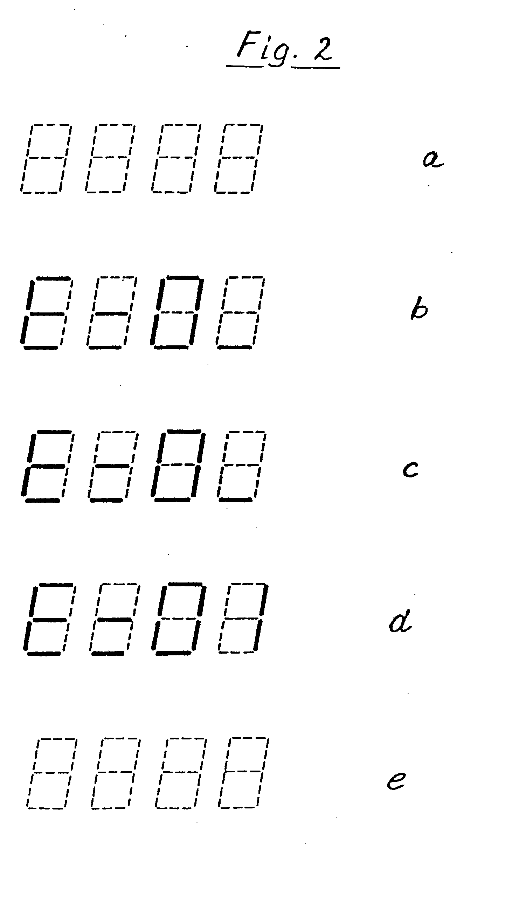

Der Ablauf der Programmeingabe und seine Anzeige auf der Anzeigetafel A sind in Fig. 2 für das Beispiel der Eingabe eines Programms mit der Kennzahl 01 veranschaulicht. Vor Beginn der Kennzahleneingabe ist auf der Anzeigetafel A eine beliebige Anzeige sichtbar, wie dies in der Zeile a von Fig. 2 durch eine Leeranzeige angedeutet ist. Während und nach der Betätigung einer Taste der Tastatur 1 für die Eingabe der ersten Ziffer der Gewählten Kennzahl erscheint auf der Anzeigetafel A ein besonderes Anzeigebild, das dem Gerätebenutzer zum einen die eingegebene erste Ziffer der Kennzahl rückmeldet und ihn zum anderen durch ein Aufforderungszeichen zur Eingabe der noch unbesetzten Ziffern der Kennzahl auffordert. Nach der Eingabe der letzten Ziffer der Kennzahl verschwindet das besondere Anzeigenbild auf der Anzeigetafel A wieder, und es erscheint dort die ursprüngliche Anzeige, wie dies in Fig. 2 in der Zeile e dargestellt ist. Den Zwischenstufen während der Eingabe der Kennzahl 01 entsprechen in Fig. 2 die Zeilen b, c und d, von denen die Zeilen b und c den Zustand bei und nach Eingabe der 0 wiedergeben, während die Zeile d die Eingabe nach der 1 anzeigt. Als Aufforderungszeichen für die Eingabe der zweiten Ziffer der Kennzahl, also bei dem gewählten Beispiel der 1, ist im gezeigten Falle der unterste Querbalken der 7-Segment-Anzeige gewählt.

Durch die Eingabe einer Kennzahl wird ein Programm oder ein Programmparameter ausgewählt bzw. eingestellt, wobei die Betätigung der Eingabetastatur T eine fortlaufende Anzeige gemäß Fig. 2 auf dem Anzeigefeld A und nach ihrem Abschluß eine entsprecende Markierung auf dem entsprechenden Anzeigeelement E der Kennzahlentafel K hervorruft, wenn die eingegebene Kennzahl eine korrekt Wahl darstellt, während eine unzulässige Kennzahl zu einer Auslösung des Signalgebers S führt. Diese Signalauslösung erfolgt dabei noch während der Eingabe der fehlerhaften bzw. unzulässigen Kennzahlziffer selbst, so daß der Gerätebenutzer den Eingabefehler anhand der Eingabeanzeige auf dem Anzeigefeld A feststellen kann.

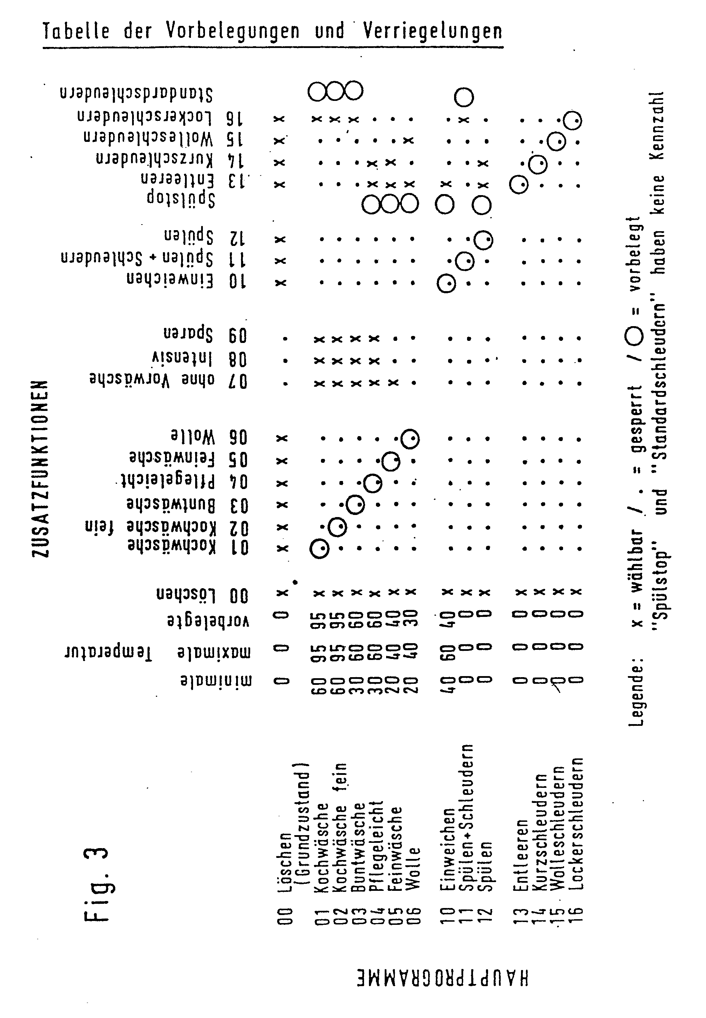

Mit der Eingabe einer ersten korrekten Kennzahl, die ein Programm bezeichnet, werden zusätzlich und automatisch alle notwendigen Programmparameter sinnvoll eingestellt, so daß die Eingabe weiterer Kennzahlen nur dann notwendig ist, wenn in einem Einzelfall andere als die standardisierten—und normalerweise günstigsten—Parameter für dieses Programm gewünscht werden. In dem Übersichtsbild von Fig. 3, das eine Tabelle der Vorbelegungen und Verriegelungen darstellt, ist für das Beispiel eines Waschautomaten gezeigt, welche Endbehandlungen (Schleudern usw.) und welche Laugentemperaturen mit der Wahl eines Grundprogramms—anhand der Kennzahlen 01 bis 06 und 10 bis 16—automatisch mit eingestellt werden. Die entsprechenden Daten sind in Fig. 3 durch das Symbol eines Kreises markiert, das den Zustand der Standardvorbelegung kennzeichnet.

Zur Verhinderung von Fehlbedienungen ist eine dynamische Kennzahlverriegelung vorgesehen, durch die in der Darstellung in Fig. 3 eine Unterscheidung zwischen wählbaren Kennzahlen (Symbol x) und gesperrten Kennzahlen (Symbol ·) erfolgt. In diesem Zusammenhang gibt es einen Grundzustand vor Beginn der Programmeingabe und mehrer Aktivzustände, die sich in Abhängigkeit von der ersten eingegebenen (korrekten) Kennzahl ergeben. Im Grundzustand sind alle Kennzahlen wählbar, die einem für das jeweilige Gerät H durchführbaren Programm entsprechen. Dies gibt dem Gerätebenutzer zugleich Veranlassung, bei der Programmeingable eine zweckmäßige Reihenfolge einzuhalten, also beispielsweise zuerst ein Programm und dann Änderungen oder Zusätze zu diesem Programm einzugeben. In der Tabelle von Fig. 3 ist der Grundzustand nach dem Löschen einer früheren Programmeinstellung in der ersten Zelle 00 (=Löschen) veranschaulicht, während die anderen Zeilen 01 bis 06 und 10 bis 16 die Aktivzustände nach Eingabe der Kennzahlen 01 bis 06 und 10 bis 16 als erste Kennzahl zeigen. Die Tabelle von Fig. 3 zeigt, daß im Grundzustand alle Grundprogramme 01 bis 06 und 10 bis 16—aber keine Parameter—wählbar sind, während in den Aktivzuständen die Auswahlmöglichkeiten erheblich eingeschränkt sind. Eine Sonderstellung nehmen die Kennzahlen 14 bis 16 insofern ein, als sie nicht nur dazu dienen können, ein kurzes eigenständiges Programm zu starten, wenn sie im Grundzustand gewählt werden, also die erste akzeptierte Kennzahl darstellen, sondern sie können gemäß Fig. 3 auch dazu dienen, vorbestimmte Programmparameter der Hauptprogramme 01 bis 06 zu ändern, wenn sie nach der Wahl eines Hauptprogrammes 01 bis 06 als zweite oder folgende akzeptierte Kennzahl gewählt werden, wie es an Kreuzungspunkten der Zeilen 01 bis 06 mit den Spalten 14 bis 16 durch die "x" als wählbar dargestellt ist.

**Patentansprüche**

1. Programmwahleinrichtung für programmgesteuerte Haushaltsgeräte, wie insbesondere Waschautomaten, bei der über eine Steuereinrichtung (St) eine Zahlentastatur (T) für die Eingabe von Programmkenndaten in Form von gegebenenfalls mehrstelligen Kennzahlen mit einer Anzeigeeinrichtung (A, K) für eine fortlaufende Anzeige der über die einzelnen Tasten der Zahlentastatur nacheinander eingegebenen Programmkenndaten und mit einem nach einem durch die eingegebenen Programmkenndaten bestimmten Programm zu betreibenden Haushaltsgerät (H) gekoppelt ist, dadurch gekennzeichnet, daß an die Steuereinrichtung (St) zusätzlich ein

Signalgeber (S) angeschlossen ist,

daß alle Programmkenndaten aus einer Kennzahl mit stets gleicher Stellenanzahl bestehen und

daß die Steuereinrichtung (St) an die Anzeigeeinrichtung (A, K) jede neu über die Zahlentastatur (T) eingegebene Kennzahlstelle weitergibt, dem Hauschaltsgerät (H) über die feste Anzahl der zu einem Programm gehörenden Kennzahlstellen hinaus jedoch nur solche weitere Kennzahlstellen zuführt, die mit dem bereits eingestellten Programm vereinbare Modifikationen für dieses Programm bedeuten, andere Kennzahlstellen jedoch für dieses eingestellte Programme nicht wirksam werden läßt und stattdessen den Signalgeber (S) aktiviert.

2. Einrichtung nach Anspruch 1, dadurch gekennzeichnet, daß die Steuereinrichtung (St) an der Anzeigeeinrichtung (A, K) mit der Eingabe der ersten Kennzahlstelle am Anzeigeort für die weiteren zu einer vollständigen Kennzahl gehörenden Kennzahlstellen ein Aufforderungszeichen zu deren anschließender Eingabe auslöst.

3. Einrichtung nach Anspruch 1 oder 2, dadurch gekennzeichnet, daß die Anzeigeeinrichtung eine mehrstellige Anzeigetafel (A) mit der Anzahl der zu einer vollständigen Kennzahl gehörenden Kennzahlstellen mindestens entsprechender Stellenanzahl und eine Kennzahlentafel (K) mit je einem Anzeigeelement (E) für jede mögliche Kennzahl aufweist.

4. Einrichtung nach Anspruch 3, dadurch gekennzeichnet, daß auf der Kennzahlentafel (K) jedem Anzeigeelement (E) eine der zugehörigen Kennzahl bzw. deren Inhalt entsprechende Datenerläuterung (D) zugeordnet ist.

5. Einrichtung nach Anspruch 3 oder 4, dadurch gekennzeichnet, daß die Anzeigetafel (A) in Form einer mehrstelligen Leuchtanzeige ausgebildet ist und als Anzeigeelement (E) auf der Kennzahlentafel (K) Leuchtdioden vorgesehen sind.

6. Einrichtung nach einem der Ansprüche 1 bis 5, dadurch gekennzeichnet, daß der Signalgeber (S) auf die Abgabe eines akustischen Signals eingerichtet ist.

## Claims

1. Programme selection device for programme controlled household appliances, such as automatic washing machines in particular, in which a numerical keyboard (T) for the input of programme characteristic data in the form of, if applicable, multi-digit code numbers is connected via a control device (St) to an indicating device (A, K) for a continuous indication of the programme characteristic data which are consecutively fed in via the individual keys of the numerical keyboard and to a household appliance (H) to be operated according to a programme determined by the programme characteristic data which has been fed in, characterised in that a signal transmitter (S) is additionally connected to the control device (St), that all programme characteristic data consist of a code number which always has the same number of digits and that the control device (St) retransmits to the indicating device (A, K) each code number digit which has just been fed in via the numerical keyboard (T), but only delivers to the household appliance (H), in addition to the fixed number of code number digits belonging to one programme, the further code number digits which indicate modifications to, and compatible with, the programme which has already been set, the said control device (St) not however letting other code number digits become operative for this set programme and instead activating the signal transmitter (S).

2. Device according to claim 1, characterised in that, with the input of the first digit code number digit, the control device (St) triggers, at the indicating point of the indicating device (A, K) for the other code number digits belonging to a complete code number, a request signal for the subsequent input thereof.

3. Device according to claim 1 or 2, characterised in that the indicating device comprises a multi-digit indicator board (A) with a number of digits corresponding at least to the number of code number digits belonging to a complete code number and a code number panel (K) with a respective indicating element (E) for each possible code number.

4. Device according to claim 3, characterised in that a data legend (D), corresponding to the relevant code number or the content thereof, is associated with each indicating element (E) on the code number panel (K).

5. Device according to claim 3 or 4, characterised in that the indicator boards (A) is in the form of a multi-digit luminous display and light-emitting diodes are provided on the code number panel (K) as indicating elements (E).

6. Device according to one of claims 1 to 5, characterised in that the signal transmitter (S) is adapted to deliver an acoustic signal.

## Revendications

1. Installation de sélection de programmes pour appareils ménagers commandés par un programme, notamment des machines à laver automatiques comportant une installation de commande (St) agissant sur un clavier de chiffres (T) pour l'introduction des donnes caractéristiques du programme sous la forme de nombres caractéristiques le cas échéant à plusieurs positions, avec un dispositif d'affichage (A, K) pour un affichage en continu des données caractéristiques du programme introduites successivement par l'intermédiaire des différentes touches du clavier de chiffres, et un appareil ménager (H) destiné à fonctionner suivant un programme déterminé par les données caractéristiques de programme introduites, caractérisée

en ce que l'installation de commande (St) est en outre reliée à un générateur de signaux (S),

en ce que toutes les données caractéristiques du programme se composent d'un nombre caractéristique ayant toujours le même nombre de positions,

et en ce que l'installation de commande (St) transmet à l'installa-tion d'affichage (A, K) chaque position de nombres caractéristiques nouvelles introduites par le clavier à chiffres (T), en ne transmettant à l'appareil ménager (H) que les positions des nombres caractéristiques qui dépassent les positions des nombres caractéristiques d'un programme que si elles correspondent à des modifications de ce programme et qui sont compatibles avec le programme déjà choisi, les autres positions de nombres caractéristiques ne pouvant agir dans le cadre de ce programme choisi et activent au lieu de cela le générateur de signaux (S).

2. Installation selon la revendication 1, caractérisée en ce que l'installation de commande (St) déclenche dans l'installation d'affichage (A, K), avec l'introduction de la première position du nombre caractéristique, à l'endroit de l'affichage pour les autres positions complétant le nombre caractéristique, un signe de demande, pour leur introduction immédiate.

3. Installation selon l'une quelconque des revendications 1 et 2, caractérisée en ce que l'installation d'affichage est un tableau d'affichage à plusieurs positions (A) qui comporte un nombre de positions de nombres caractéristiques appartenant aux nombres caractéristiques complets, et au moins un nombre de positions correspondant et un tableau de nombres caractéristiques (A) avec chaque fois un élément d'affichage (E) pour chaque nombre caracteristique possible.

4. Installation selon la revendication 3, caractérisée en ce que sur le tableau (K) des nombres caractéristiques, à chaque élément d'affichage (E) il est associé un nombre caractéristique correspondant ou l'explication de données (D) correspondant à son contenu.

5. Installation selon l'une quelconque des revendications 3 ou 4, caractérisée en ce que le tableau d'affichage (A) est réalisé sous la forme d'un afficharge lumineux à plusieurs positions et les éléments d'affichage (E) sont constitués par des diodes électroluminescentes sur le tableau du nombre caractéristique (K).

6. Installation selon l'une quelconque des revendications 1 à 5, caractérisée en ce que le générateur de signaux (S) est prévu pour émettre un signal acoustique.

Fig. 1

0 008 377

0 008 377

Fig. 2

a

b

c

d

e

2

## Fig. 3

**ZUSATZFUNKTIONEN**

HAUPTPROGRAMME

| | min. | max. | vorbel. | 00 Löschen | 01 Kochwäsche | 02 Kochwäsche fein | 03 Buntwäsche | 04 Pflegeleicht | 05 Feinwäsche | 06 Wolle | 07 ohne Vorwäsche | 08 Intensiv | 09 Sparen | 10 Einweichen | 11 Spülen+Schleudern | 12 Spülen | Spülstop | 13 Entleeren | 14 Kurzschleudern | 15 Wolleschleudern | 16 Lockerschleudern | Standardschleudern |
|---|---|---|---|---|---|---|---|---|---|---|---|---|---|---|---|---|---|---|---|---|---|---|
| 00 Löschen (Grundzustand) | 0 | 0 | 0 | x | x | x | x | x | x | x | . | . | . | x | x | x | | x | x | x | x | |
| 01 Kochwäsche | 60 | 95 | 95 | x | O | . | . | . | . | . | x | x | x | . | . | . | . | . | . | . | x | O |
| 02 Kochwäsche fein | 60 | 95 | 95 | x | . | O | . | . | . | . | x | x | x | . | . | . | . | . | . | . | x | O |
| 03 Buntwäsche | 30 | 60 | 60 | x | . | . | O | . | . | . | x | x | x | . | . | . | . | . | . | . | x | O |
| 04 Pflegeleicht | 30 | 60 | 60 | x | . | . | . | O | . | . | x | x | x | . | . | . | O | O | x | x | . | |
| 05 Feinwäsche | 20 | 40 | 40 | x | . | . | . | . | O | . | x | . | . | . | . | . | O | O | O | x | x | |
| 06 Wolle | 20 | 40 | 30 | x | . | . | . | . | . | O | . | . | . | . | . | . | O | O | x | . | x | |
| 10 Einweichen | 40 | 60 | 40 | x | . | . | . | . | . | . | . | . | . | O | . | O | x | . | . | . | . | O |
| 11 Spülen+Schleudern | 0 | 0 | 0 | x | . | . | . | . | . | . | . | . | . | . | O | O | . | . | . | . | x | O |
| 12 Spülen | 0 | 0 | 0 | x | . | . | . | . | . | . | . | . | . | . | . | O | O | x | x | . | . | |
| 13 Entleeren | 0 | 0 | 0 | x | . | . | . | . | . | . | . | . | . | . | . | . | O | . | . | . | | |
| 14 Kurzschleudern | 0 | 0 | 0 | x | . | . | . | . | . | . | . | . | . | . | . | . | . | O | . | . | | |
| 15 Wolleschleudern | 0 | 0 | 0 | x | . | . | . | . | . | . | . | . | . | . | . | . | . | . | O | . | | |
| 16 Lockerschleudern | 0 | 0 | 0 | x | . | . | . | . | . | . | . | . | . | . | . | . | . | . | . | O | | |

Legende:  x = wählbar  /  . = gesperrt  /  O = vorbelegt

"Spülstop"  und  "Standardschleudern"  haben  keine  Kennzahl